# EUROPEAN PATENT APPLICATION

(11) **EP 4 471 184 A1**
(43) Date of publication of application: **04.12.2024**
(21) Application number: 23020267.3
(22) Date of filing: 30.05.2023
(51) Int. Cl.: C25B 1/04, C25B 5/00, C25B 9/17, C25B 11/02, C25B 15/00, H01M 8/0656

(54) **DYNAMIC HYDROGEN ECONOMY**

(71) Applicant: Podhola, Kamil, 46311 Liberec 30 (CZ)
(72) Inventor: Podhola, Kamil, 46311 Liberec 30 (CZ)

(57) **Abstract**

The invention relates to a dynamic hydrogen economy (DHE) system with first and second electrolytic active circuit (EAC) electrodes providing an electrical current to produce hydrogen gas. The first/second EAC electrodes can be provided in an aqueous or non-aqueous electrolyte, they can be provided in a galvanic system, they can be configured like homopolar generators, they can form an array, they can be oriented substantially vertically or horizontally, they can be provided in a flexible enveloping material, they can include an enlarging element, they can be provided in a stacked configuration, they can have defined shapes, they can be coupled with a vehicle and/or a vessel. A hydrogen gas electrolysis production method using the first and second EAC electrodes is provided. A dynamic galvanic method comprising the first and second EAC electrodes is provided.

## Description

### Technical Field

The invention relates to dynamic systems for hydrogen and electricity production.

### Background Art

There is a wide range of hydrogen gas production systems and methods working with an electrochemical cell involving the transfer of charge, by the movement of ions in a liquid or solid phase and the movement of electrons in a solid phase, through which electrochemical transformation can be achieved. The electrochemical cell is formed by placing two conducting materials (conductors or semiconductors) - electrodes, into an ionically conducting electrolyte and electronically connecting them. Oxidations take place at the anodes and reductions at the cathodes, both are linked with by the flow of the current of electrons in the electrodes and ions in the separating electrolyte. The electrochemical cells can be galvanic cells or electrolysis cells. The galvanic cells can be batteries or fuel cells generating electricity. Electrolysis cells conventionally require an applied potential field which magnitude determines the rate of the charge transfer and ionic flux. Electrolytic processes are used for various applications such as synthesis of chemicals, production of metals, water purification and treatment, metal finishing, energy storage and generation, corrosion protection, etc. Electrolysis can be used in organic and inorganic production e.g. a combined chlorine and caustic soda (NaOH) production and aluminium electrowinning. The chlor-alkali production includes the production of hydrogen by water electrolysis. Hydrogen as a by-product at the cathode can be produced by an oxidative electro-synthesis including an aqueous electrolyte. A cathodic synthesis can also produce hydrogen. Electrolysis and photo-electrolysis of carbon dioxide with water to carbon monoxide and hydrogen (synthetic gas), formic acid or methanol (which can be catalytically produced from carbon dioxide and hydrogen). Hydrogen can be reacted with oxygen to release energy in combustion engines or in fuel cells producing its only by-product - water and zero emissions. Hydrogen fuel has the highest gravimetric energy density of any known fuel. The energy can be released in both electrochemical and combustion processes. Fuel cells convertion formula: H₂+ ½ O₂=H₂O; fuel cells producing electricity, water and heat which can be recovered in higher temperature or lower temeperature systems.

Hydrogen storage systems can be for example compressed gas systems, liquified gas systems, cryogenic systems, chemical systems, electrochemical systems, physi-sorption systems, nanomaterial systems, intercallation in metals systems, intercallation in hydrides systems, inorganic gaseous systems, inorganic liquids systems, inorganic solids systems, organic gaseous systems, organic liquids systems, organic solids systems, or combinations. Effective storage media can be based on lithium, nitrogen, boron and carbon, ammoia, hydrocarbon-based compounds, LiBH4, etc.

Hydrogen transportation system can be for example traditional tanks, composite storage tanks (lightweight composites), etc. The energy of 1 kg hydrogen equals approximately to 3 kg petrol. 15 kg H₂ equal 60 litres tank. A 800 bar storage tank would have a volume for hydrogen of 375 litres. If an efficiency of a fuel cell could be doubled, the tank volume could be half in size. Energy density of petrol is much greater than hydrogen in liquid, hydride or gasesous form.

Hydrogen can be produced by several methods including chemical, electrochemical, catalytic, thermal and biological processes. Biological and biomass systems and nuclear fission and fusion can include electrolysis. Endothermic catalytic steam reforming of natural gas is a dominant hydrogen production method.

Fuel cells can be higher temperature (200-900°C) or lower temperature fuel cells (under 100°C).

Electrolysis produces hydrogen for the electronics, pharmaceutical, food industries, transportation, etc. In electrolysis a voltage is applied to the cells and a DC current passes between two electrodes in contact with an ionic conductiong medium, with hydrogen and oxygen produced by water decomposition.

Electrolysers can be alkaline electrolysers, solid polymer membrane electrolysers. Cell technologies are often based on elevated pressure of approximately 30 bar. Commercially valuable oxygen gas is also produced. Alkaline electrolyser typically includes a separator (a diaphragm) separating hydrogen gas from oxygen gas not to form an explosive mixture. Low cost metal catalyst such as nickel can be used for the electrodes.

In polymer electrolyte membrane (PEM) electrolysers the PEM is the means for separating the two gases. Alkaline PEM can use for example a copper cobalt oxide anode catalyst and Ni cathode.

Higher temperature electrolysers can be based on solid oxide ionic conductor technology e.g. using solid oxide fuel cells (SOFCs) and yttria-stabilised zirconia (YSZ) electrolytes and nickel zirconia cermet (ceramic-metal) cathode and the strontium-doped lanthanum manganite anode, with zirconium oxide membrane.

Electrolysis using organic fuels such as natural gas, alcohol, biological fuels, etc. can have a very high effeiciency and voltage reduction.

Photo-electrolysis using photovoltaic cells converting solar radiation to electricity used in electrolysers to generate hydrogen from water. The process can be combined in a single process in which photon absorbtion creates electron-hole pairs that electrochemically split water molecules. Absorbers can either convert part of the photon energy to electricity or use it for the decomposition of water. The systems can use TiO₂ photo-anode and Pt cathode evolving hydrogen.

Photo-electrochemical (PEC) systems can combine photovoltaic, semiconductors and electrolysers in one unit. Cells includes two electrodes, a light-absorbing semiconductor can be used as either the anode, the cathode, or both. Photo-anode can be made of a n-type semiconductor and a metal cathode, or photo-cathode can be made of a p-type semiconductor and a metal anode, or photo-anode made of a n-type semiconductor and a photo-cathode made of a p-type semiconductor.

Insulators are substances with large band gaps, semiconductors have smaller band gaps, and conductors very small gaps or none. Photons in photocatalysts require semiconductors with small band gaps, e.g. oxide semiconductors, stable non-oxide semiconductors, illuminated organic dyes can be used, e.g. Grätzel cell. UV stabilizers, UV absorbing luminescent chromophores, antioxidants can be used. Tandem cell designs can be provided. The maximum theoretical efficiencies for photo-electrolysis can be up to 52% for a signle band gap absorber.

Other generation processes can include biological and biomass processes, thermal-electrochemical generation of hydrogen from water e.g. including high-temperature thermochemical coupling; high temperature thermal decomposition of hydrogen iodide, H₂SO4, calcium-bromide conversion, etc.

Hydrogen can be a by-product from electrolysis of sodium chloride, NaCl, etc.

Fuel cells can be classified by the kind of the employed electrolyte determining the electrochemical reactions and other operating parameters. Polymer electrolyte membrane (PEM) fuel cells use a solid polymer as an electrolyte and porous carbon electrodes containing platinum or platinum alloy catalyst. They need hydrogen, oxygen and water to operate. Fuel cells can be powered by hydrogen which is either fed or generated by reforming hydrogen-rich fuels. Direct methanol fuel cells (FMFCs) are powerd by pure methanol mixed with water. Alkaline fuel cells (AFCs) use a solution of potassium hydroxide in water as the electrolyte (or a polymer membrane) and can use various non-precious metals as a catalyst at the electrodes. Phosphoric acid fuel cells (PAFCs) use liquid phosphoric acid as an electrolyte contained in a teflon-bonded silicon carbide mix and porous carbon electrodes with a platinum catalyst. Molten carbonate fuel cells use the electrolyte of a molten carbonate salt mixture in a porous ceramic lithium alluminium oxide matrix. Solid oxide fuel cells use a hard non-porous ceramic compound as the electrolyte. Reversible fuel cells can use electricity from solar power, wind power, etc., to provide electrolysis and to store energy in the form of hydrogen.

All batteries produce hydrogen as part of the charging process, e.g. Lead-Acid, Ni-Cad, Lithium Ion, etc.

### Disclosure of Invention

Currently around 95% of the hydrogen produced worldwide is from hydrocarbons typically using reaction with steam and 5% of hydrogen is produced using electrolysis of water mainly from renewable energy sources. There is a need to improve this ratio to eliminate fossil fuels from the cycle, to promote hydropower from renewable sources, to improve electrolysers' efficiency mainly in splitting water into hydrogen and oxygen. Each fuel cell technology has challenges concerning electrodes shapes which can be improved by the proposed dynamic approach. Each rechargeable battery producing hydrogen as a by-product when being charged has electrodes which shapes can be dynamically improved by the proposed system to boost their effectivness.

It is an object of the present invention to provide a dynamic hydrogen economy (DHE) system comprising a first electrolytic active circuit electrode and a second electrolytic active circuit electrode, the system characterised in that the first and/or the second electrolytic active circuit electrodes provide an electrical current to produce hydrogen gas.

It is another object to provide the DHE system with the first and/or the second electrolytic active circuit electrodes provided in an aqueous electrolyte.

It is another object to provide the DHE system with the first and/or the second electrolytic active circuit electrodes provided in an non-aqueous electrolyte.

It is another object to provide the DHE system with the first and/or the second electrolytic active circuit electrodes provided in a galvanic system.

It is another object to provide the DHE system with the first and/or the second electrolytic active circuit electrodes configured like homopolar generators.

It is another object to provide the DHE system with the first and/or the second electrolytic active circuit electrodes forming an array.

It is another object to provide the DHE system with the first and/or the second electrolytic active circuit electrodes oriented substantially vertically.

It is another object to provide the DHE system with the first and/or the second electrolytic active circuit electrodes oriented substantially horizontally.

It is another object to provide the DHE system with the first and/or the second electrolytic active circuit electrodes provided in a flexible enveloping material.

It is another object to provide the DHE system with the first and/or the second electrolytic active circuit electrodes including an enlarging element.

It is another object to provide the DHE system with the first and/or the second electrolytic active circuit electrodes provided in a stacked configuration.

It is another object to provide the DHE system with the first and/or the second electrolytic active circuit electrodes having defined shapes.

It is another object to provide the DHE system with the first and/or the second electrolytic active circuit electrodes coupled with a vehicle and/or a vessel.

It is an object of the present invention to provide a hydrogen gas electrolysis production method comprising the step of providing a first electrolytic active circuit electrode and a second electrolytic active circuit electrode, the step of providing an electrical current in the first electrolytic active circuit electrode and the second electrolytic active circuit electrode, the step of producing hydrogen gas wherein the steps can be repeated.

It is an object of the present invention to provide a dynamic galvanic method comprising the step of providing a first electrolytic active circuit electrode and a second electrolytic active circuit electrode the both said electrodes disposed in one or more galvanic cells, the step of providing an electrical current in the first electrolytic active circuit electrode and the second electrolytic active circuit electrode, the step of producing electricity from hydrogen gas or charging a rechargeable battery in said one or more galvanic cells, wherein the steps can be repeated.

In a first aspect, the invention discloses the dynamic hydrogen economy system.

In a second aspect, the invention discloses the hydrogen gas electrolysis production method.

In a third aspect, the invention discloses the dynamic galvanic method.

### Brief Description of Drawings

The invention will now be described by way of example. Only essential elements of the invention are schematically shown and not to scale nor in proportions and only partially oriented to facilitate immediate understanding, emphasis being placed upon illustrating the principles of the invention.
FIG. 1 is a schematic diagram of a previous art acidic electrolyser.
FIG. 2 is a schematic diagram of a previous art alkaline electrolyser.
FIG. 3 is a schematic diagram of a previous art solid oxide electrolyser.
FIG. 4 is a perspective illustration of an embodiment of a dynamic hydrogen economy (DHE) system.
FIG. 5 is a functional schematic plan view of a DHE system.
FIG. 6 is a perspective illustration of a DHE system forming an array.
FIG. 7 is a perspective illustration of a DHE system with first and second electrolytic active circuit (EAC) electrodes oriented substantially vertically.
FIG. 8 is a perspective illustration of a DHE system with first and second EAC electrodes oriented substantially horizontally and provided in a flexible enveloping material.
FIG. 9 is an oblique view of a DHE system with T-shaped first and elongated-shaped second EAC electrodes.
FIG. 10 is a side sectional view of a DHE system with first and second EAC electrodes coupled with a vehicle.
FIG. 11 is a plan view of a DHE system with U-shaped first and second EAC electrodes.
FIG. 12 is a plan view of a DHE system with U-shaped first and second EAC electrodes including an enlarging element.
FIG. 13 is an oblique view of a DHE system with U-shaped first and second EAC electrodes.
FIG. 14 is an oblique view of a DHE system with L-shaped first and second EAC electrodes.
FIG. 15 is an oblique view of a DHE system with cross-shaped first and second EAC electrodes.
FIG. 16 is a side view of a DHE system with U-shaped first and second EAC electrodes.
FIG. 17 is an oblique view of a DHE system with first and second EAC electrodes provided in a stacked configuration.
FIG. 18 is an oblique view of a DHE system with elongated-shaped first and crescent-shaped second EAC electrodes.
FIG. 19 is a perspective illustration of a DHE system with elongated-shaped first and second EAC electrodes.
FIG. 20 is a perspective illustration of a DHE system provided in a galvanic system.
FIG. 21 is a perspective illustration of a DHE system with three-dimensionally shaped first and elongated-shaped second EAC electrodes.
FIG. 22 is an oblique view of a DHE system with disc-shaped first and elongated-shaped second EAC electrodes.
FIG. 23 is a schematic plan view of a DHE system with first and second EAC electrodes.
FIG. 24 is a schematic plan view of a DHE system with flat-shaped first and second EAC electrodes provided in a stacked configuration.
FIG. 25 is a schematic plan view of a DHE system with flat-shaped first and second EAC electrodes provided in a stacked configuration.
FIG. 26 is a perspective illustration of a DHE system with star-shaped first and second EAC electrodes provided in an aqueous electrolyte.
FIG. 27 is a perspective illustration of a DHE system with first and second EAC electrodes configured like a homopolar generator.
FIG. 28 is an oblique view of a DHE system with first and second EAC electrodes configured like a homopolar generator.
FIG. 29 is a perspective illustration of a DHE system with first and second EAC electrodes configured like a disc homopolar generator and coupled with a vehicle.
FIG. 30 is a perspective illustration of a DHE system with first and second EAC electrodes configured like a drum homopolar generator.
FIG. 31 is an oblique view of a DHE system with first and second EAC electrodes configured like a homopolar generator.
FIG. 32 is an oblique view of a DHE system with first and second EAC electrodes provided in a stacked configuration and configured like a homopolar generator.
FIG. 33 is an oblique view of a DHE system with first and second EAC electrodes provided in a stacked configuration and configured like a homopolar generator.
FIG. 34 is a side sectional view of a DHE system with first and second EAC electrodes coupled with a vehicle.
FIG. 35 is a perspective illustration with a partial cut-out of a DHE system (a dynamic electrolyser).
FIG. 36 is a perspective illustration of another functional part of the dynamic electrolyser shown in FIG. 35.

### Best Mode for Carrying Out the Invention

The following detailed description shows the best contemplated modes of exemplary embodiments. The description is made for the purpose of illustrating the general principles of the invention, and in such a detail that a skilled person in the art can recognise the advantages of the invention, and can be able to make and use the invention. However, it will be apparent to one of ordinary skill in the art that these specific details need not be used to practice the present invention. Well-known structures, materials, circuits, processes have not been shown or described in detail in order not to unnecessarily obscure the present invention. The objects and advantages of this invention may be realized and obtained as pointed out in the appended claims. Advantageous embodiments are the subject of the description, the figures and the dependent claims. Additional advantages may be learned by practice of the invention. The detailed description is not intended to limit the principle of the presented invention, but only to show the possibilities of it. The description and the detailed description are exemplary and explanatory only.

The terms used in the claims and the specification shall refer to their synonyms as well.

As used in the claims and the specification, the terms vehicle and vessel shall refer to any constructional type inclusive of full electric, hybrid electric, internal combustion engine (ICE) powered, etc., vehicles and/or vessels.

As used in the claims and the specification, the term "internal combustion engine" shall refer to any constructional type inclusive of hydrogen fuelled engines, hydrocarbon fuels fuelled engines, etc., and shall refer to reciprocating, rotary, continuous combustion engines as well.

As used in the claims and the specification, the term "homopolar generator" shall refer to any type inclusive drum generators, disc generators, multiple disc generators, corrugated-shape generators, combined generators, generators coupled with conductive belts, conductive bearings, etc.

As used in the claims and the specification, the term "rechargeable power source" shall preferably not exclusively refer to power sources including rechargeable batteries [e.g. strings, packs, modules, cells], capacitors [e.g. strings, packs, modules, cells], hybrid sources, energy storage elements [e.g. mechanical (e.g. compressed air, compressed gas, flywheel, etc.), electromagnetical (e.g. using superconductors, etc.), electrochemical (e.g. flow battery, ultrabattery, etc.), thermal (e.g. phase change material, cryogenic energy storage, liquid nitrogen engine, etc.), chemical (e.g. biofuel storage, power to gas storage, power to liquid, hydrogen storage /e.g. condensed polycyclic hydrocarbons, metal hydrides, etc./, hydrogen peroxide, etc.); a number of hydrogen storage methods can be used: adsorptive, absorptive, as liquid /e.g. at very low temperatures and under high pressure/, as highly compressed gas.]. Rechargeable power sources can provide peak shaving, e.g. for optimum ICE fuel consumption.

The term shall refer to a swappable rechargeable power source as well.

As used in the specification, the term "rechargeable battery" shall preferably not exclusively refer to lithium-ion, lithium-ion polymer, lithium-air, lithium-sulphur, lithium-metal, lithium iron phosphate, nickel-metal hydride, nickel-iron, nickel-cadmium, lead-acid, valve regulated lead-acid, absorbed glass mat, gel [e.g. for high pressure, high temperature implementations], solid state, organic radical batteries. Rechargeable batteries may include fuel cells, piezoelectric elements, springs. A variety of arrangements of multiple rechargeable batteries may be used. Rechargeable batteries may be trickle, float charged, charged at fast, slow rates, etc.

As used in the specification, the term "capacitor" shall preferably not exclusively refer to supercapacitors, ultracapacitors, double-layer capacitors (e.g. with activated carbons, carbon aerogels, carbon nanotubes, nanoporous carbon, graphene, carbid-derived carbon), pseudocapacitors (e.g. with polymers, metall oxides), hybrid capacitors (e.g. with asymmetric electrodes, lithium-ion capacitors, with composite electrodes), electrolytic capacitors (e.g. aluminium electrolytic capacitors), ceramic capacitors, mica capacitors, film capacitors, chip shape, lead shape capacitors, multilevel circuit board processed capacitors, etc.

As used in the claims and the specification, "A/B" shall refer to A and/or B.

As used in the claims and the specification, the singular forms are intended to include the plural forms as well.

The term "to couple" and derivatives shall refer to a direct or indirect connection via another device and/or connection, such a connection can be mechanical, hydraulical, electrical, electronical, electromagnetical, pneumatical, communication, functional, etc., the term shall also refer to attach, detach, detachably attach, mount, connect, fix, join, support, link, bear, fasten, secure, tie, tether, chain, screw, weld, bond, solder, etc. Similarly as far as the term "coupling" concerned.

The terms "to comprise", "to include", "to contain", "to provide" and derivatives specify the presence of an element, but do not preclude the presence or addition of one or more other elements or groups and combinations thereof.

The term "consisting of" characterises a Markush group which is by nature closed. Single members of the group are alternatively useable for the purpose of the invention. Therefore, a singular if used in the Markush group would indicate only one member of the group to be used. For that reason are the countable members listed in the plural. That means together with qualifying language after the group "or combinations thereof" that only one member of the Markush group can be chosen or any combination of the listed members in any numbers. In other words, although elements in the Markush groups may be described in the plural, the singular is contemplated as well. Furthermore, the phrase "at least one" preceding the Markush groups is to be interpreted that the group does not exclude one or more additional elements preceded by the phrase.

The invention will be described in reference to the accompanying drawings.

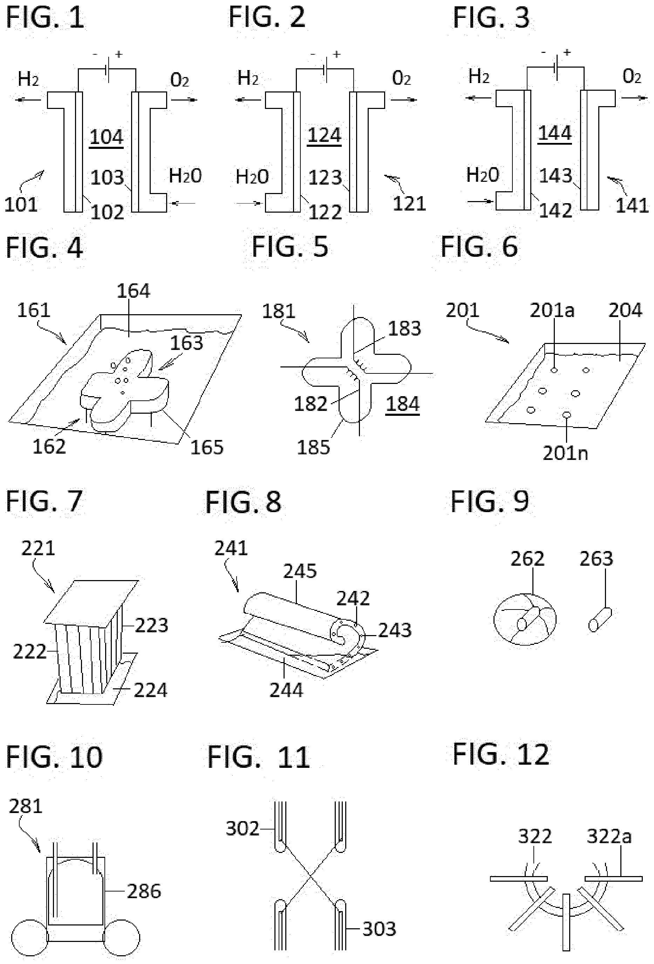

FIG. 1 is a schematic diagram of a previous art acidic electrolyser (PEM). In general in the acidic electrolyser (101) hydrogen is evolved on the cathode (-) (102) and oxygen on the anode (+) (103). Between the electrodes is the electrolyte (104) [an aqueous electrolyte, H₂S0_{4]} which acts as an electrical insulator and ionic conductor. A membrane [Polymer Electrolyte Membrane (PEM)] separates the evolved gases H2 and O₂ between the electrodes (102, 103).

FIG. 2 is a schematic diagram of a previous art alkaline electrolyser (AEL). In general in the alkaline electrolyser (121) hydrogen is evolved on the cathode (-) (122) and oxygen on the anode (+) (123). Between the electrodes is the electrolyte (124) [highly caustic KOH solution in H2O] which acts as an electrical insulator and ionic conductor. A membrane [porous to hydroxyl ions and impermeable to H2 and O₂] separates the evolved gases H2 and O₂ between the electrodes (122, 123). Zero gap designs have been mostly adopted.

FIG. 3 is a schematic diagram of a previous art solid oxide electrolyser (SOEC). In general in the solid oxide electrolyser (141) hydrogen is evolved on the cathode (-) (142) and oxygen on the anode (+) (143). Between the electrodes is the electrolyte (144) [solid oxide electrolyte] which acts as an electrical insulator and ionic conductor. A membrane [the ceramic solid oxide electrolyte membrane] separates the evolved gases H2 and O₂ between the electrodes (142, 143) by means of thermal energy from heat in combination with electrical energy from an electric current.

FIG. 4 is a perspective illustration of an embodiment of a dynamic hydrogen economy (DHE) system. In a DHE electrolyser (161) hydrogen is evolved on a first electrolytic active circuit (EAC) electrode (162) [e.g. a cathode (-)] and oxygen on a second EAC electrode (163) [e.g. an anode (+)]. Between the first and second EAC electrodes (162, 163) there is the electrolyte (164) which acts as an electrical insulator and ionic conductor. A membrane (not shown) can separate the evolved gases H2 and O₂ between the EAC electrodes (162, 163) developed by means of electrical energy from an electric current provided. A porous body (165) can be provided.

FIG. 5 is a functional schematic plan view of the a DHE system as shown in FIG. 4. In a DHE electrolyser (181) hydrogen is evolved on a first EAC electrode (182) [e.g. a cathode (-)] and oxygen on a second EAC electrode (183) [e.g. an anode (+)]. Between the first and second EAC electrodes (182, 183) there is the electrolyte (184) which acts as an electrical insulator and ionic conductor. A membrane (not shown) can separate the evolved gases H2 and O₂ between the EAC electrodes (182, 183) developed by means of electrical energy from an electric current provided. A body (185) can be provided.

FIG. 6 is a perspective illustration of a DHE system. In a DHE electrolyser (201) first/second EAC electrode units (201a to 201n) can form an array provided in an electrolyte (204).

FIG. 7 is a perspective illustration of a DHE system. In a DHE electrolyser (221) first and second EAC electrodes (222, 223) can be oriented substantially vertically and can be put into an electrolyte (224).

FIG. 8 is a perspective illustration of a DHE system. In a DHE electrolyser (241) first and second EAC electrodes (242, 243) can be oriented substantially horizontally, provided in a flexible enveloping material (245) and can be put into an electrolyte (244).

FIG. 9 is an oblique view of a DHE system with T-shaped first EAC electrode (262) and elongated-shaped second electrode (263).

FIG. 10 is a schematic side sectional view of a DHE system. In a DHE electrolyser (281) first and second EAC electrodes (not shown) can be coupled with a vehicle (286) [and similarly with a vessel (not shown)].

FIG. 11 is a plan view of a DHE system with U-shaped first and second EAC electrodes (302, 303).

FIG. 12 is a plan view of a DHE system with an U-shaped an EAC electrode (322) including an enlarging element (322a).

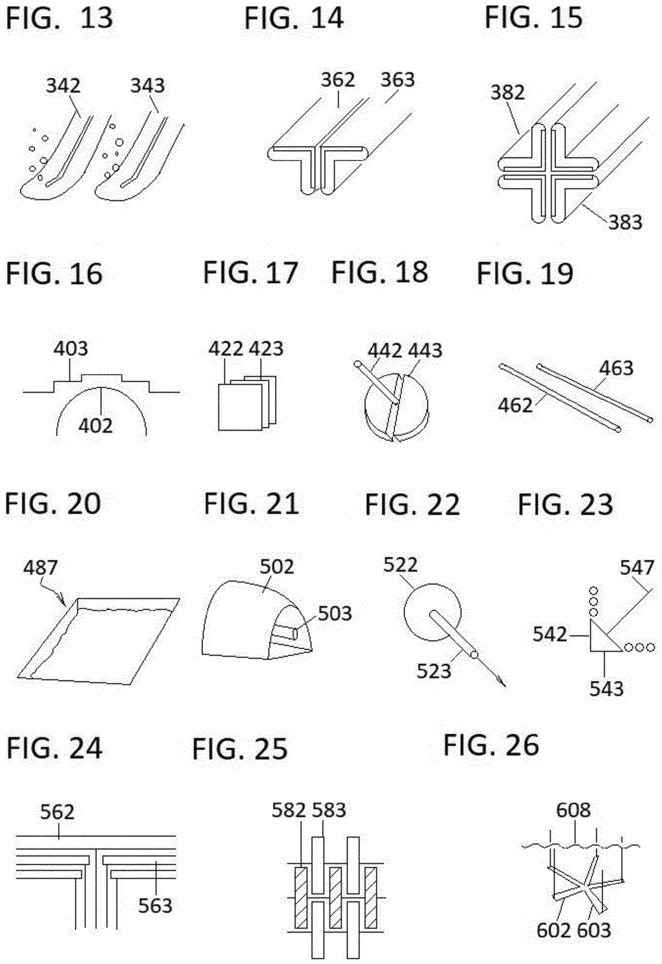

FIG. 13 is an oblique view of a DHE system with U-shaped first and second EAC electrodes (342, 343).

FIG. 14 is an oblique view of a DHE system with L-shaped first and second EAC electrodes (362, 363).

FIG. 15 is an oblique view of a DHE system with cross-shaped first and second EAC electrodes (382, 383).

FIG. 16 is a side view of a DHE system with U-shaped first and second EAC electrodes (402, 403).

FIG. 17 is an oblique view of a DHE system with first and second EAC electrodes (422, 423) provided in a stacked configuration.

FIG. 18 is an oblique view of a DHE system with elongated-shaped first and crescent-shaped second electrolytic active circuit electrodes (442, 443).

FIG. 19 is a perspective illustration of a DHE system with elongated-shaped first and second EAC electrodes (462, 463).

FIG. 20 is a perspective illustration of a DHE system provided in a galvanic system (487).

FIG. 21 is a perspective illustration of a DHE system with three-dimensionally shaped first and elongated-shaped second electrolytic active circuit electrodes (502, 503).

FIG. 22 is an oblique view of a DHE system with disc-shaped first and elongated-shaped second electrolytic active circuit electrodes (522, 523).

FIG. 23 is a schematic plan of a DHE system with first and second EAC electrodes (542, 543) and a membrane (547).

FIG. 24 is a schematic plan view of a DHE system with flat-shaped first and second EAC electrodes (562, 563) provided in a stacked configuration.

FIG. 25 is a schematic plan view of a DHE system with flat-shaped first and second EAC electrodes (582, 583) provided in a stacked configuration.

FIG. 26 is a perspective illustration of a DHE system with star-shaped first and second electrolytic active circuit electrodes (602, 603) provided in an aqueous electrolyte (608).

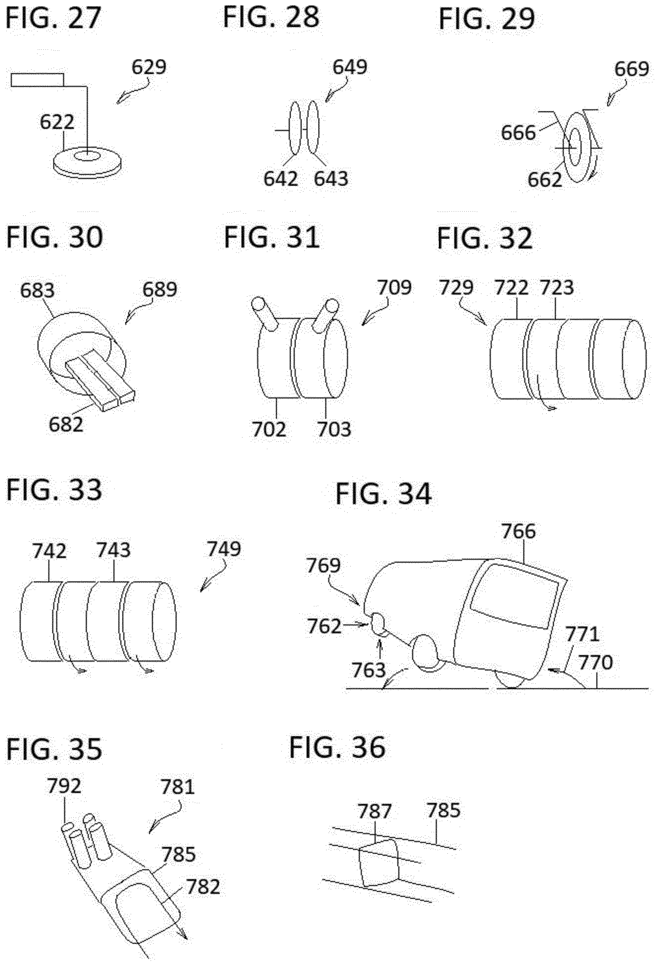

FIG. 27 is a perspective illustration of a DHE system with first (and/or second) EAC electrodes (622) configured like a homopolar generator (629).

FIG. 28 is an oblique view of a DHE system with first and second EAC electrodes (642, 643) configured like a homopolar generator (649).

FIG. 29 is a perspective illustration of a DHE system with at least one (first and/or second) EAC electrode (662) configured like a disc homopolar generator (669) and coupled with a vehicle (666) which can ride on a track (not shown) which can provide an (electro-) magnetic field and be part of the system [e.g. together with a static/dynamic charging system].

FIG. 30 is a perspective illustration of a DHE system with first and second electrolytic active circuit electrodes (682, 683) configured like a drum homopolar generator (689).

FIG. 31 is an oblique view of a DHE system with first and second EAC electrodes (702, 703) configured like a homopolar generator (709).

FIG. 32 is an oblique view of a DHE system with first and second EAC electrodes (722, 723) provided in a stacked configuration and configured like a homopolar generator (729).

FIG. 33 is an oblique view of a DHE system with first and second EAC electrodes (742, 743) provided in a stacked configuration and configured like a homopolar generator (749).

FIG. 34 is a perspective illustration of a DHE system with first and second EAC electrodes (762, 763) configured like a homopolar generator (769) and coupled with a vehicle (766) provided on a track (770) providing an (electro-) magnetic field (771) [e.g. transversely oriented].

FIG. 35 is a perspective illustration with a partial cut-out of a DHE system. In a DHE electrolyser (781) (whose one half is partially shown) first and second EAC electrodes (782, the second electrode not shown) can be provided in a body (785) and can be put into an electrolyte (not shown). A membrane (not shown) can separate the evolved gases H2 and O₂ between the EAC electrodes (only 782 shown) which can be conducted by first and second conducts (only 792 shown).

FIG. 36 is a perspective illustration of another functional part of the DHE electrolyser shown in FIG. 35. A membrane (787) provided in the body (785) can separate the evolved gases H2 and O₂

### Common features of drawings.

The components as shown in FIGs. 1 to 36 can have different layouts [e.g. a form or a position of the first and/or second electrolytic active circuit electrodes, etc.].

The (swappable) rechargeable power sources [e.g. in coupled electric vehicles] can include a package [e.g. a container, a climatised container, a waterproof, watertight, pressurised package, etc.], include and/or be coupled with a source management system which can include power electronics, communication interfaces, various circuit topologies including electrocomponents such as converters, inverters, voltage regulators, power factor corrections, rectifiers, filters, controllers, processors, etc. The source management systems can provide monitoring [e.g. State of Charge (SoC), etc.], calculating, reporting, cell balancing, controlling, etc., functions with regard to the energy management. The source management system can include energy management processors, databases, position identification system [e.g. global positioning satellite (GPS) system receivers] and provide intelligent source management using anticipated track profile and conditions, charging opportunities, past operating experience, etc.

The (swappable) rechargeable power sources can include an energy storage element including a complex technology [e.g. including energy storage, energy transfer, energy harvesting, energy generating, etc.] which can include power electronics, communication interfaces, various circuit topologies, etc. They can be mobile units, compact units, enclosed units, portable units, skid mounted units, and the like.

No limitations are intended others than as described in the claims. The present invention is not limited to the described exemplary embodiments. It should be noted that various modifications and combinations of the elements of the DHE system and proposed methods can be made without departing from the scope of the invention as defined by the claims.

The elements, components, integers, features, standards desribed in this specification and the used terminology reflect the state of knowledge at the time of the filling of this application and may be developed in the future [e.g. charging standards, charging interfaces, chargers, rechargeable power sources, energy storage elements, communication techniques, fuels, hydrogen production and hydrogen storage techniques, fuel cell technologies, etc.].

### Industrial Applicability

The present invention may provide an effective hydrogen and electricity production systems and methods with a new dynamic approach significantly improving the state of art and efficiency of current systems for hydrogen or electricity production. The present invention can be provided in vehicles and/or vessels thus improving current state of utilizing hydrogen power in the transportation and thus increasing electric cars' or vessels' autonomy.

## Claims

1. A dynamic hydrogen economy system, comprising: a first electrolytic active circuit electrode and a second electrolytic active circuit electrode, the system **characterised in that** said first and/or said second electrolytic active circuit electrodes provide an electrical current to produce hydrogen gas.

2. The dynamic hydrogen electrolysis system according to claim 1, wherein said first and/or said second electrolytic active circuit electrodes are provided in an aqueous electrolyte.

3. The dynamic hydrogen electrolysis system according to claim 1, wherein said first and/or said second electrolytic active circuit electrodes are provided in a non-aqueous electrolyte.

4. The dynamic hydrogen electrolysis system according to claim 1, wherein said first and/or said second electrolytic active circuit electrodes are provided in a galvanic system.

5. The dynamic hydrogen electrolysis system according to claim 1, wherein said first and/or said second electrolytic active circuit electrodes are configured like homopolar generators.

6. The dynamic hydrogen electrolysis system according to claim 1, wherein said first and/or said second electrolytic active circuit electrodes form an array.

7. The dynamic hydrogen electrolysis system according to claim 1, wherein said first and/or said second electrolytic active circuit electrodes are oriented substantially vertically.

8. The dynamic hydrogen electrolysis system according to claim 1, wherein said first and/or said second electrolytic active circuit electrodes are oriented substantially horizontally.

9. The dynamic hydrogen electrolysis system according to claim 1, wherein said first and/or said second electrolytic active circuit electrodes are provided in a flexible enveloping material.

10. The dynamic hydrogen electrolysis system according to claim 1, wherein said first and/or said second electrolytic active circuit electrodes include an enlarging element.

11. The dynamic hydrogen electrolysis system according to claim 1, wherein said first and/or said second electrolytic active circuit electrodes are provided in a stacked configuration.

12. The dynamic hydrogen electrolysis system according to claim 1, wherein said first and/or said second electrolytic active circuit electrodes have a shape wherein at least one said shape is selected from the group consisting of T-shaped, L-shaped, U-shaped, cross-shaped, star-shaped, disc-shaped, crescent-shaped, elongated-shaped, three-dimensionally shaped, flat-shaped, or combinations thereof.

13. The dynamic hydrogen electrolysis system according to claim 1, wherein said first and/or said second electrolytic active circuit electrodes are coupled with a vehicle and/or a vessel.

14. A hydrogen gas electrolysis production method comprising:
the step of providing a first electrolytic active circuit electrode and a second electrolytic active circuit electrode;
the step of providing an electrical current in said first electrolytic active circuit electrode and said second electrolytic active circuit electrode;
the step of producing hydrogen gas,
wherein the steps can be repeated.

15. A dynamic galvanic method comprising:
the step of providing a first electrolytic active circuit electrode and a second electrolytic active circuit electrode the both said electrodes disposed in one or more galvanic cells;
the step of providing an electrical current in said first electrolytic active circuit electrode and said second electrolytic active circuit electrode;
the step of producing electricity from hydrogen gas or charging a rechargeable battery in said one or more galvanic cells,
wherein the steps can be repeated.
